# EUROPEAN PATENT SPECIFICATION

(11) **EP 4 084 403 B1**
(45) Date of publication and mention of the grant of the patent: **06.03.2024**
(21) Application number: 20914867.5
(22) Date of filing: 21.01.2020
(51) Int. Cl.: H04L 12/02, H04L 49/15, H04L 49/25

(54) **SWITCH ELEMENT AND SWITCH APPARATUS**
SCHALTELEMENT UND SCHALTVORRICHTUNG
ÉLÉMENT DE COMMUTATION ET APPAREIL DE COMMUTATION

(43) Date of publication of application: 02.11.2022
(73) Proprietor: Huawei Technologies Co., Ltd., Shenzhen, Guangdong 518129 (CN)
(72) Inventor: ZHANG, Jian, Shenzhen, Guangdong 518129 (CN)
(74) Representative: Maiwald GmbH
(86) International application number: PCT/CN2020/073642
(87) International publication number: WO 2021/146964

(56) References cited:
- EP-A1- 3 382 935
- WO-A2-2007/079095
- CN-A- 101 304 374
- CN-A- 101 394 288
- CN-A- 102 088 412
- CN-A- 102 356 598
- US-A1- 2010 061 242
- Liu Jianqin, Zhimin Miao: "Application of Super Large Scale Switching Chip PEB2047", International Electronic Elements, 1 January 1996 (1996-01-01), pages 34-36, XP055831532,

## Description

### TECHNICAL FIELD

This application relates to the field of switch fabric technologies, and in particular, to a switch fabric chip and a switch device.

### BACKGROUND

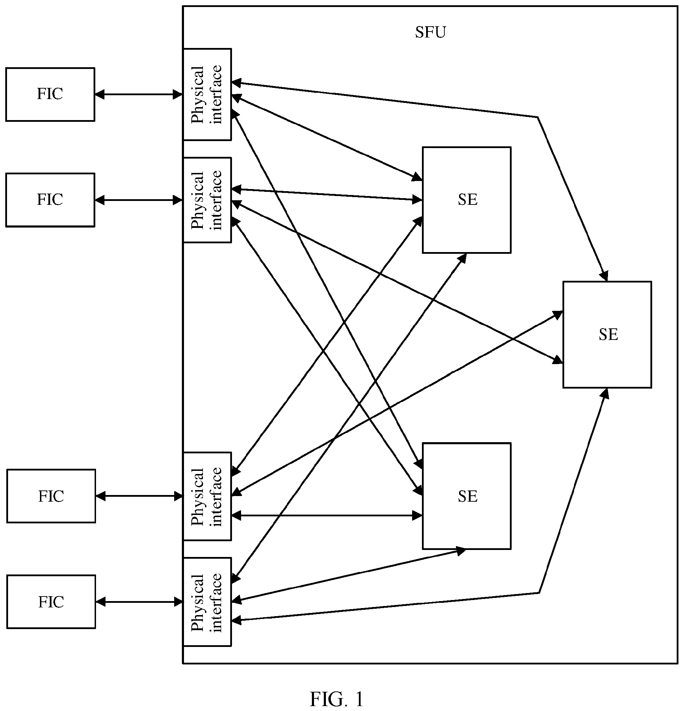

In an existing switch device, a switch fabric interface card (FIC) needs to be fully connected to all switch elements (SEs). As shown in FIG. 1, that is, for each FIC, the FIC needs to be connected to all SEs in a switch fabric unit (SFU). The SE may also be referred to as a switch fabric chip or a network chip, and the FIC may also be referred to as a line plug chip or a line card.

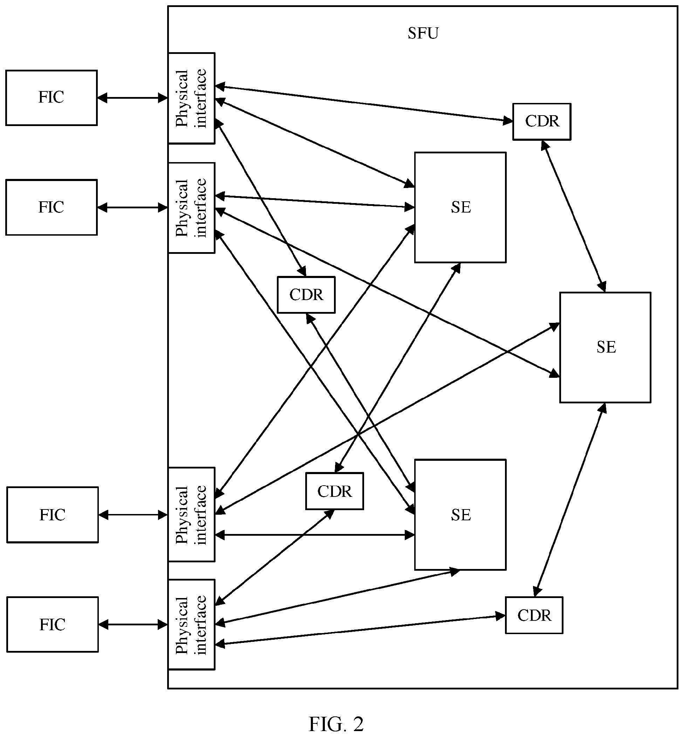

In actual application, because an area of an SFU is excessively large, when an FIC is connected to a remote SE, because they are far away from each other, a physical trace is long and a transmission loss is large during connection. This affects accuracy of data transmission between the FIC and the remote SE. As a result, a bit error rate of data is high. A solution is that a clock data recovery (CDR) chip is disposed on the SFU as shown in FIG. 2, to serve as a relay between the FIC and the remote SE. In this solution, because the CDR chip needs to be additionally configured, costs and power consumption of a switch device are increased.

Therefore, a data switch solution is urgently needed, to reduce costs and power consumption of a switch device while improving accuracy of data transmission between a FIC and a remote SE. Other existing switch devices are disclosed in the patent publications EP3382935A1 and US2010/061242A1.

### SUMMARY

This invention is defined by the appended claims. This application provides a switch fabric chip and a switch device, to reduce costs and power consumption of the switch device while improving accuracy of data transmission between a FIC and a remote SE.

According to a first aspect, this application provides a switch fabric chip, including: a first medium access control MAC layer circuit, configured to: perform parsing processing on an input first data stream to obtain a second data stream, and output the second data stream to a processor and a first data selector; the processor, coupled to the first MAC layer circuit, and configured to: perform scheduling and switch processing on the second data stream to obtain a third data stream, and output the third data stream to the first data selector; the first data selector, coupled to the first MAC layer circuit and the processor, and configured to: when the first data stream is a data stream that is switched to another switch fabric chip in a switch device in which the switch fabric chip is located, select to output the second data stream, and when the first data stream is a data stream that is switched to another switch device, select to output the third data stream; and a second MAC layer circuit, coupled to the first data selector, and configured to: perform sending processing on a fourth data stream output by the first data selector, to obtain a fifth data stream.

According to the switch fabric chip provided in the first aspect, there are two transmission paths in the switch fabric chip. One transmission path is used for transmitting a data stream to another SE. In this case, the switch fabric chip serves as a relay SE. The other transmission path is used for transmitting the data stream to another switch device. The transmission path may be used for implementing a function of an existing SE, that is, for implementing data switch between switch devices. In other words, the switch fabric chip in the first aspect may be configured to implement the function of the existing SE, and may also serve as the relay SE in the switch device to implement a connection between an FIC and a remote SE. In addition, when serving as the relay SE, the switch fabric chip may transmit a data stream through a specific transmission path. In this way, a processing delay of the data stream is reduced. Therefore, the switch fabric chip provided in the first aspect can avoid a high bit error rate caused by path loss when the FIC directly transmits a data stream to the remote SE. In addition, because no additional CDR chip is required to serve as a relay when this solution is used, costs and power consumption of the switch device are reduced.

In a possible design, the first MAC layer circuit is further configured to: receive a first frequency deviation match cell, where the first frequency deviation match cell indicates a frequency deviation between an upper-level chip of the switch fabric chip and the switch fabric chip; and perform frequency modulation on the second data stream based on the first frequency deviation match cell. The second MAC layer circuit is further configured to: insert, into the fifth data stream, a second frequency deviation match cell delivered by a controller in the switch device in which the switch fabric chip is located, where the second frequency deviation match cell indicates a frequency deviation between the switch fabric chip and a lower-level chip of the switch fabric chip.

When a data stream is transmitted between a plurality of chips, operating frequencies of the chips may be different. For the switch fabric chip provided in the first aspect, the first MAC layer circuit may perform frequency modulation on the second data stream based on the first frequency deviation match cell, so that the second data stream is applicable to an operating frequency of the switch fabric chip. Similarly, the second MAC layer circuit may also insert the second frequency deviation match cell into the fifth data stream, so that the lower-level chip may perform frequency modulation on the received data stream based on the second frequency deviation match cell.

In addition, the first MAC layer circuit may first perform frequency modulation on the first data stream based on the first frequency deviation match cell, and then perform parsing processing on the modulated first data stream, to obtain the second data stream. In other words, in this embodiment of this application, a sequence of performing frequency modulation and parsing processing by the first MAC layer circuit is not limited. Similarly, in this embodiment of this application, a sequence of performing frequency modulation and sending processing by the second MAC layer circuit is also not limited.

In addition, the switch fabric chip provided in the first aspect may further include: a first PCS circuit, configured to: receive a sixth data stream from at least one first chip interface of the switch fabric chip, perform forward error correction FEC coding and cell delineation to obtain the first data stream, and output the first data stream to the first MAC layer circuit; and a second PCS circuit, coupled to the second MAC layer circuit, and configured to: perform encoding processing on the fifth data stream to obtain a seventh data stream, and output the seventh data stream to at least one second chip interface of the switch fabric chip.

In a possible design, the first PCS circuit is further configured to: switch a transmission sequence of at least one sub-data stream included in the sixth data stream.

According to the foregoing solution, the first PCS circuit switches the transmission sequence of the sub-data stream. This can reduce difficulty in routing inside the switch fabric chip, or reduce difficulty in routing between the switch fabric chip and another switch fabric chip or another switch device. This can improve flexibility in data stream processing.

In a possible design, the second PCS circuit is further configured to: switch a transmission sequence of at least one sub-data stream included in the seventh data stream.

According to the foregoing solution, the second PCS circuit switches the transmission sequence of the sub-data stream. This can reduce difficulty in routing inside the switch fabric chip, or reduce difficulty in routing between the switch fabric chip and another switch fabric chip or another switch device. This can improve flexibility in data stream processing.

In addition, the switch fabric chip provided in the first aspect may further include a selector matrix. The selector matrix includes NxN second data selectors arranged in an array. Every two adjacent second data selectors in the NxN second data selectors are coupled. The selector matrix is coupled to N first MAC layer circuits and N second MAC layer circuits that are included in the switch fabric chip, and is configured to output, to any one of the N second MAC layer circuits, a data stream input by any one of the N first MAC layer circuits, and N≥1. When performing parsing processing on the input data stream and outputting the parsed data stream to the first data selector, the first MAC layer circuit is specifically configured to: perform parsing processing on the input data stream, and output the parsed data stream to the first data selector by using the selector matrix.

The selector matrix being coupled to the N first MAC layer circuits and the N second MAC layer circuits may mean that some of the NxN second data selectors are separately connected to the N first MAC layer circuits, and some of the NxN second data selectors are separately connected to the N second MAC layer circuits. In the NxN second data selectors, some second data selectors are connected to only the first MAC layer circuit, some second data selectors are connected to only the second MAC layer circuit, some second data selectors are connected to both the first MAC layer circuit and the second MAC layer circuit, and some second data selectors are not connected to either the first MAC layer circuit or the second MAC layer circuit.

According to the foregoing solution, when the switch fabric chip includes a large quantity of MAC layer circuits, data stream transmission between any two MAC layer circuits may be implemented by using one selector matrix. This can reduce complexity of signal routing, and improve flexibility in data stream transmission.

Each of the NxN second data selectors may be a two-input two-output bidirectional data selector.

According to the foregoing solution, the first MAC layer circuit and the second MAC layer circuit are chips that can perform bidirectional processing on a data stream.

According to a second aspect, this application provides a switch device. The switch device includes a plurality of FICs and a switch fabric unit. The switch fabric unit integrates a plurality of switch fabric chips and a controller. At least one of the plurality of switch fabric chips is the switch fabric chip provided in any one of the first aspect and the possible designs of the first aspect. The plurality of FICs are separately directly connected to each of the plurality of switch fabric chips or are connected by using the switch fabric chip provided in any one of the first aspect and the possible designs of the first aspect. The controller is configured to send a control signal to a first data selector in the switch fabric chip. The control signal indicates the first data selector to select to output a data stream input by a first MAC layer circuit or output a data stream input by a processor.

In addition, for technical effects brought by any possible design manner in the second aspect, refer to technical effects brought by different design manners in the first aspect. Details are not described herein again.

### BRIEF DESCRIPTION OF DRAWINGS

FIG. 1 is a schematic diagram of a structure of a switch device according to a conventional technology;
FIG. 2 is a schematic diagram of a structure of another switch device according to a conventional technology;
FIG. 3 is a schematic diagram of a structure of a switch device according to this application;
FIG. 4 is a schematic diagram of a structure of a first switch fabric chip according to this application;
FIG. 5 is a schematic diagram of a structure of a second switch fabric chip according to this application;
FIG. 6 is a schematic diagram of a structure of a selector matrix according to an embodiment of this application;
FIG. 7 is a schematic diagram of a structure of a third switch fabric chip according to an embodiment of this application;
FIG. 8 is a schematic diagram of a structure of a two-level data selector according to an embodiment of this application; and
FIG. 9 is a schematic diagram of a structure of the switch device according to this application.

### DESCRIPTION OF EMBODIMENTS

The following first describes an application scenario in embodiments of this application.

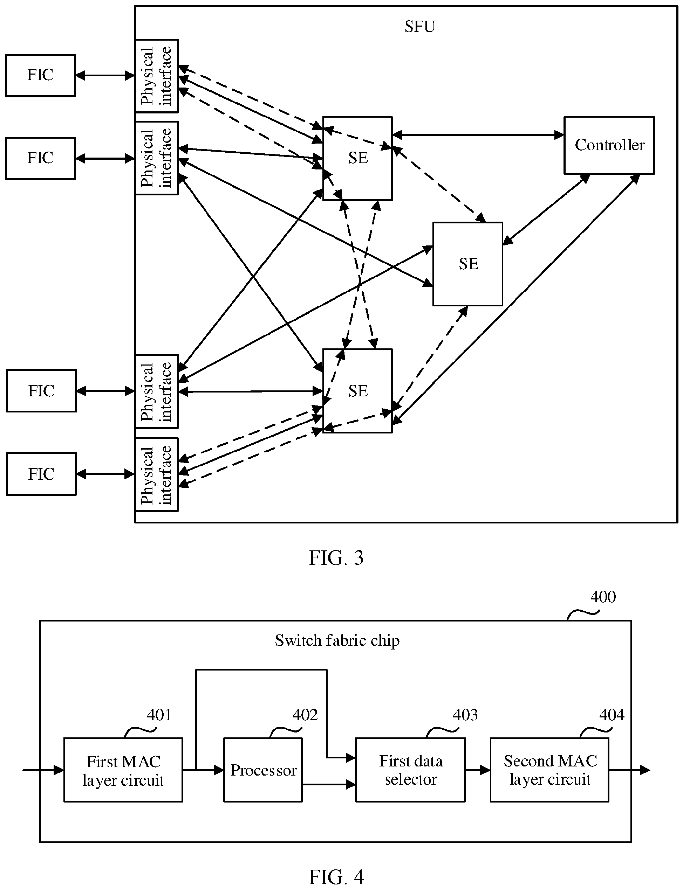

Embodiments of this application may be applied to a switch device shown in FIG. 3. As shown in FIG. 3, the switch device includes a plurality of FICs and an SFU. The SFU integrates a plurality of SEs (that is, switch fabric chips) and one controller.

It should be noted that, in the switch device shown in FIG. 3, quantities of FICs and SEs are merely examples. In actual application, quantities of FICs and SEs included in the switch device are not specifically limited.

In the switch device shown in FIG. 3, when all the FICs are connected to the SEs, for an FIC and an SE that are close to each other, the SE is directly connected to the FIC (as shown by a solid line in FIG. 3). For an FIC and an SE that are far from each other, another SE may serve as a relay to implement connection between the FIC and the remote SE (as shown by a dashed line in FIG. 3). Therefore, for an SE that serves as a relay, a data stream output by the SE may be output to another switch device as an output of the SFU (that is, an output of the entire switch device). The data stream output by the SE may also be output to another SE on the SFU.

The SFU further integrates the controller. The controller may control the SE. Specifically, in this embodiment of this application, the controller may control a data selector in an SE based on a target flow direction (for example, outputting to another switch device or outputting to another SE on the SFU) of a data stream transmitted in the SE, to select and output a corresponding data stream.

In addition, in actual application, the quantity of FICs in the switch device may be inconsistent with the quantity of chip interfaces in the SE. For example, the quantity of chip interfaces in the SE may be far greater than the quantity of FICs. Therefore, when receiving a data stream of an FIC, the SE may simultaneously receive at least one sub-data stream from the same FIC through a plurality of chip interfaces (in this case, the FIC is separately connected to different chip interfaces in the SE through at least one physical trace). For example, eight chip interfaces in the SE separately receive eight sub-data streams from a same FIC. This can increase transmission bandwidth between the SE and the FIC. Therefore, when internal processing is performed in the SE, parallel/serial conversion may be performed on at least one sub-data stream from a same FIC to form a data stream for subsequent processing. In this embodiment of this application, in the data stream formed after parallel/serial conversion is performed on the at least one sub-data stream from the same FIC, sequences of the sub-data streams may be exchanged.

Therefore, in switch device shown in FIG. 3, the SE is connected to the FIC through a physical interface on the SFU. The physical interface is merely an example. In actual application, the physical interface may correspond to a plurality of chip interfaces on the SFU.

Embodiments of this application provide a switch fabric chip and a switch device, to reduce costs and power consumption of the switch device while improving accuracy of data transmission between a FIC and a remote SE.

The following further describes in detail embodiments of this application with reference to the accompanying drawings.

It should be noted that "a plurality of" used in this application means two or more. In addition, it should be understood that, in the description of this application, terms such as "first" and "second" are merely used for distinguishing and description, but should not be understood as indicating or implying relative importance, or should not be understood as indicating or implying a sequence.

FIG. 4 is a schematic diagram of a structure of a switch fabric chip according to an embodiment of this application. A switch fabric chip 400 includes a first medium access control (MAC) layer circuit 401, a processor 402, a first data selector 403, and a second MAC layer circuit 404.

The first MAC layer circuit 401 is configured to perform parsing processing (for example, verifying a first data stream and extracting header information from the first data stream) on the input first data stream to obtain a second data stream, and output the second data stream to the processor 402 and the first data selector 403. The processor 402 is coupled to the first MAC layer circuit 401, and is configured to perform scheduling and switch processing on the second data stream to obtain a third data stream, and output the third data stream to the first data selector 403. The first data selector 403 is coupled to the first MAC layer circuit 401 and the processor 402, and is configured to: when the first data stream is a data stream that is switched to another switch fabric chip in a switch device in which the switch fabric chip 400 is located, select to output the second data stream, and when the first data stream is a data stream that is switched to another switch device, select to output the third data stream. The second MAC layer circuit 404 is coupled to the first data selector 403, and is configured to perform sending processing on a fourth data stream output by the first data selector 403, to obtain a fifth data stream.

The first MAC layer circuit 401 and the second MAC layer circuit 404 may be implemented by using a logic circuit or an analog circuit.

In the foregoing data stream processing procedure, the first MAC layer circuit 401 may be considered as a MAC layer circuit of an ingress port, and is configured to process the data stream input to the switch fabric chip 400, and the second MAC layer circuit 404 may be considered as a MAC layer circuit of an egress port, and is configured to process the data stream to be output by the switch fabric chip 400.

It can be easily learned that, in the switch fabric chip 400, there are two transmission paths for the data stream. One transmission path is the first MAC layer circuit 401 → the processor 402 → the first data selector 403 → the second MAC layer circuit 404. The other transmission path is the first MAC layer circuit 401 → the first data selector 403 → the second MAC layer circuit 404. Compared with the first transmission path, the second transmission path can output the data stream without performing scheduling and switch processing by the processor 402. Therefore, when the switch fabric chip 400 serves as a relay SE to transmit a data stream to another SE in an SFU, the second transmission path (the first MAC layer circuit 401 → the first data selector 403 → the second MAC layer circuit 404) may be selected for transmission, and scheduling processing may not be performed on the data stream. This can reduce a processing delay of the data stream. When the switch fabric chip 400 transmits a data stream to another switch device other than the switch device in which the switch fabric chip 400 is located, the first transmission path (the first MAC layer circuit 401 → the processor 402 → the first data selector 403 → the second MAC layer circuit 404) may be selected for transmission, to implement scheduling and switch of the data stream, and output the data stream to the another switch device.

In this embodiment of this application, there are two transmission paths in the switch fabric chip 400. One transmission path is used for transmitting a data stream to another SE. In this case, the switch fabric chip 400 serves as a relay SE. The other transmission path is used for transmitting the data stream to another switch device. The transmission path may be used for implementing a function of an existing SE, that is, for implementing data switch between switch devices. When serving as the relay SE, the switch fabric chip 400 may transmit a data stream through a specific transmission path. This can reduce a processing delay of the data stream. The switch fabric chip can avoid a high bit error rate caused by path loss when an FIC directly transmits a data stream to a remote SE. In addition, because no additional CDR chip is required to serve as a relay when this solution is used, costs and power consumption of the switch device are reduced.

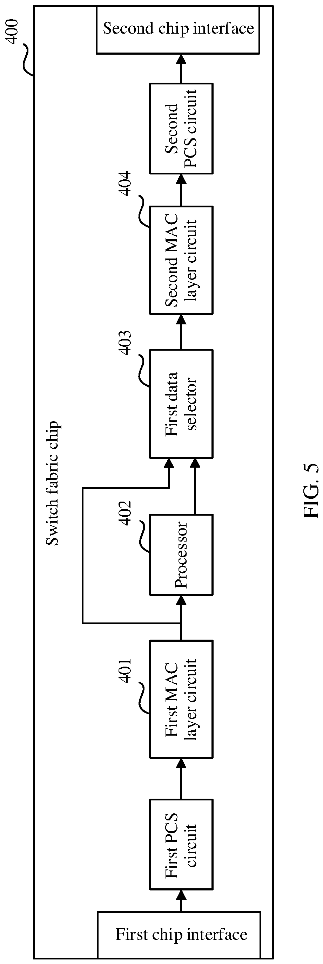

In addition, the switch fabric chip 400 may further include: a first physical coding sublayer (PCS) circuit, configured to: receive a sixth data stream from at least one first chip interface of the switch fabric chip 400, perform forward error correction (FEC) coding and cell delineation to obtain the first data stream, and output the first data stream to the first MAC layer circuit 401; and a second PCS circuit, coupled to the second MAC layer circuit 404, and configured to: perform encoding processing on the fifth data stream to obtain a seventh data stream, and output the seventh data stream to at least one second chip interface of the switch fabric chip 400. In this case, a structure of the switch fabric chip 400 may be shown in FIG. 5. FIG. 5 illustrates only one first chip interface and one second chip interface. In actual application, there may be a plurality of first chip interfaces and second chip interfaces.

The first chip interface and the second chip interface are interfaces through which the switch fabric chip 400 inputs and outputs a data stream to the outside. The first chip interface may be an interface configured to receive a data stream, and the second chip interface may be an interface configured to output a data stream. Certainly, the first chip interface and the second chip interface may alternatively be bidirectional transmission interfaces. In other words, the first chip interface is configured to both receive and output a data stream, and the second chip interface is configured to both receive and output a data stream. If both the first chip interface and the second chip interface are bidirectional transmission interfaces, correspondingly the first MAC layer circuit 401, the second MAC layer circuit 404, the first PCS circuit, and the second PCS circuit are also chips that can perform bidirectional processing.

The sixth data stream received by the first PCS circuit from the at least one first chip interface may be a sixth data stream obtained after serial processing is performed on a data stream received by the at least one first chip interface by using a serializer/deserializer (SERDES). The seventh data stream output by the second PCS circuit may be output to the at least one second chip interface after deserialization processing is performed by the SERDES.

In actual application, the at least one first chip interface may receive the sixth data stream from a same FIC in the switch device. To be specific, to increase transmission bandwidth between the FIC and the switch fabric chip 400, the FIC may transmit at least one sub-data stream in parallel. The at least one sub-data stream is separately received by the at least one first chip interface, and is serially processed by the SERDES, to form the sixth data stream. Subsequent processing is performed by a circuit such as the first PCS circuit and the first MAC layer circuit in the switch fabric chip 400. Similarly, the seventh data stream on which the second PCS circuit performs encoding processing may also be deserialized by the SERDES to form at least one sub-data stream. The at least one sub-data stream is output through the at least one second chip interface, so that a lower-level chip or device performs processing.

In this embodiment of this application, the first PCS circuit may be further configured to: switch a transmission sequence of the at least one sub-data stream included in the sixth data stream. The second PCS circuit may be further configured to: switch a transmission sequence of the at least one sub-data stream included in the seventh data stream.

A processing procedure in which the first PCS circuit switches the transmission sequence is used as an example. It is assumed that eight first chip interfaces (a first chip interface 1 to a first chip interface 8) of the switch fabric chip 400 separately receive eight sub-data streams from a same FIC, which are respectively A, B, C, D, E, F, G, and H. The eight sub-data streams form the foregoing sixth data stream. After serial processing is performed, the eight sub-data streams are transmitted to the first PCS circuit according to a transmission sequence of A, B, C, D, E, F, G and H. The first PCS circuit may adjust the sequence of the eight sub-data streams, for example, adjust the sequence to A, C, B, D, E, G, F and H. For a manner in which the second PCS circuit switches the transmission sequence of the sub-data stream, refer to the processing procedure in which the first PCS circuit switches the transmission sequence. Details are not described herein again.

In actual application, the first PCS circuit and the second PCS circuit may switch transmission sequences of the sub-data streams by using a data selector (MUX).

The first PCS circuit and the second PCS circuit switch the transmission sequence of the sub-data stream. This can reduce difficulty in routing inside the switch fabric chip 400, or reduce difficulty in routing between the switch fabric chip 400 and another switch fabric chip or another switch device. This can improve flexibility in data stream processing.

For example, to reduce difficulty in routing between the FIC and the switch fabric chip 400, a sequence of the sub-data streams received by the first PCS circuit from the at least one first chip interface is not a sequence that complies with a real time sequence rule of the at least one first chip interface. Therefore, after receiving the sixth data stream, the first PCS circuit may adjust a transmission sequence of the at least one sub-data stream in the sixth data stream, so that the adjusted transmission sequence complies with the real time sequence rule.

In a specific example, it is assumed that, according to a real transmission time sequence, the sub-data streams should be transmitted in a sequence of A, B, C, and D. To be specific, A+B+C+D may be spliced into a data stream transmitted by the FIC to the switch fabric chip 400. However, in actual application, to reduce difficulty in physical routing between the FIC and the switch fabric chip 400, it is more appropriate to transmit the sub-data streams in a sequence of A, C, B, and D. In this case, the sub-data streams may be transmitted in the sequence of A, C, B, and D. After receiving A+C+B+D, the first PCS circuit adjusts the sequence of the sub-data streams to A, B, C, and D.

In addition, in the switch fabric chip 400, the first MAC layer circuit 401 may be further configured to: receive a first frequency deviation match cell (frequency match cell, FM cell), where the first frequency deviation match cell indicates a frequency deviation between an upper-level chip of the switch fabric chip and the switch fabric chip; and perform frequency modulation on the second data stream based on the first frequency deviation match cell. The second MAC layer circuit 404 may be further configured to: insert, into the fifth data stream, a second frequency deviation match cell delivered by a controller in the switch device in which the switch fabric chip is located, where the second frequency deviation match cell indicates a frequency deviation between the switch fabric chip and a lower-level chip of the switch fabric chip.

When a data stream is transmitted between a plurality of chips, operating frequencies of the chips may be different. For the switch fabric chip 400, frequency modulation may be performed on the second data stream based on the first frequency deviation match cell, so that the second data stream is applicable to an operating frequency of the switch fabric chip 400. Similarly, the switch fabric chip 400 may also insert the second frequency deviation match cell into the fifth data stream on which the sending processing is performed, so that the lower-level chip may perform frequency modulation on the received data stream based on the second frequency deviation match cell.

As described above, in this embodiment of this application, there are two transmission paths for the data stream in the switch fabric chip 400. One transmission path is the first MAC layer circuit 401 → the processor 402 → the first data selector 403 → the second MAC layer circuit 404. The other transmission path is the first MAC layer circuit 401 → the first data selector 403 → the second MAC layer circuit 404. Compared with the first transmission path, the second transmission path can output the data stream without performing scheduling by the processor 402, and may be selected and used when the switch fabric chip 400 serves as the relay SE.

When the switch fabric chip 400 includes only the first MAC layer circuit 401 and the second MAC layer circuit 404, the second transmission path may be implemented through a physical trace between the first MAC layer circuit 401 and the first data selector 403. However, in actual application, because there are a large quantity of chip interfaces and a large quantity of MAC layer circuits in the switch fabric chip 400, when the second transmission path is formed between any two MAC layer circuits in the switch fabric chip 400, if all the two MAC layer circuits are directly connected through a physical trace, physical routing in the switch fabric chip 400 is complex. In this case, the second transmission path may be implemented by using a selector matrix.

Specifically, if the switch fabric chip 400 includes N first MAC layer circuits 401 and N second MAC layer circuits 404, the selector matrix may include NxN second data selectors arranged in an array. Every two adjacent second data selectors in the NxN second data selectors are coupled. The selector matrix is coupled to the N first MAC layer circuits 401 and the N second MAC layer circuits 404, and is configured to output, to any one of the N second MAC layer circuits 404, a data stream input by any one of the N first MAC layer circuits 401, and N≥1.

Each second data selector is a two-input two-output bidirectional data selector. In other words, each second data selector may select an input data stream (either one), or may select an output flow direction of the data stream (either one). Because the selector matrix is coupled to the N first MAC layer circuits 401 and the N second MAC layer circuits 404, a data stream input by any first MAC layer circuit 401 may be output to any second MAC layer circuit 404 by selecting a plurality of second data selectors within the selector matrix. This can avoid complex physical routing that is generated when the first MAC layer circuit 401 is directly connected to the second MAC layer circuit 404 through the physical trace, and reduce an area of the switch fabric chip 400.

Therefore, when performing parsing processing on the input data stream and outputting the parsed data stream to the first data selector 403, the first MAC layer circuit 401 is specifically configured to: perform parsing processing on the input data stream, and output the parsed data stream to the first data selector 403 by using the selector matrix.

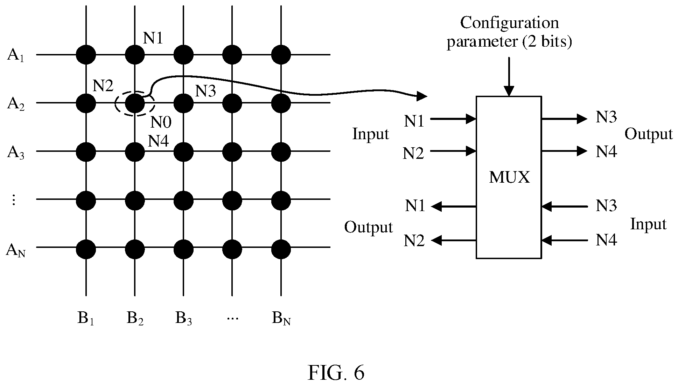

For example, the selector matrix may be shown in FIG. 6. In the selector matrix shown in FIG. 6, N ports (that is, A₁, A₂, A₃, ..., A_{N}) on a left side may be separately connected to N first MAC layer circuits 401, and N ports (that is, B₁, B₂, B₃, ..., B_{N}) on the bottom may be separately connected to N second MAC layer circuits 404.

In the selector matrix shown in FIG. 6, each black dot represents one second data selector. Specifically, the second data selector may be a two-input two-output bidirectional data selector (that is, a 2x2 bidirectional data selector), as shown in FIG. 6.

It should be noted that because the second data selector is the bidirectional data selector, in another implementation, the N ports (that is, A₁, A₂, A₃, ..., A_{N}) on the left side may also be separately connected to the N second MAC layer circuits 404, and the N ports (that is, B₁, B₂, B₃, ..., B_{N}) on the bottom may also be separately connected to the N first MAC layer circuits 401. The following illustrates only an example in which the N ports on the left side are separately connected to the N first MAC layer circuits 401 and the N ports on the bottom are separately connected to the N second MAC layer circuits 404.

A second data selector in a second row and a second column in the selector matrix shown in FIG. 6 (that is, the second data selector drawn by using an elliptic dashed circle in FIG. 6) is used as an example. For ease of description, the second data selector is referred to as an N0, a second data selector connected to the N0 and located above the N0 is referred to as an N1, a second data selector connected to the N0 and located on a left side of the N0 is referred to as an N2, a second data selector connected to the N0 and located on a right side of the N0 is referred to as an N3, and a second data selector connected to the N0 and located below the N0 is referred to as an N4, as shown in FIG. 6. The N0 may be configured to select either of data streams from the N1 and the N2, and output the selected data stream to the N3 or the N4, for example, select to output a data stream from the N1 to the N4. Because the N0 is a bidirectional data selector, the N0 may also be configured to select data streams from the N3 and the N4, and output the selected data stream to the N1 or the N2, for example, select to output a data stream from the N2 to the N3. The N0 may perform the foregoing selection based on an input 2-bit configuration parameter. The configuration parameter may be delivered by a controller integrated with an SFU of a switch device in which a switch fabric chip 400 is located.

It can be easily learned that, by using the selector matrix shown in FIG. 6, through continuous selection of a plurality of second data selectors, a data stream input from any port of A₁, A₂, A₃, ..., A_{N} on the left side may be switched to any port of B₁, B₂, B₃, ..., B_{N} on the bottom, and a data stream input from any port of B₁, B₂, B₃, ..., B_{N} on the bottom may also be switched to any port of A₁, A₂, A₃, ..., A_{N} on the left side. Because the N ports on the left side are separately connected to the N first MAC layer circuits 401, and the N ports on the bottom are separately connected to the N second MAC layer circuits 404, a data stream input by any one of the N first MAC layer circuits 401 may be output to any one of the N second MAC layer circuits 404 by using the selector matrix shown in FIG. 6.

In this embodiment of this application, for the switch fabric chip 400, a data stream output by the first MAC layer circuit 401 may be input to a first data selector 403 by using the selector matrix. Further, the data stream output by the first MAC layer circuit 401 is input to the second MAC layer circuit 404 through selection of the first data selector 403. For an application scenario in which the switch fabric chip 400 includes the N first MAC layer circuits 401 and the N second MAC layer circuits 404, data stream transmission between any first MAC layer circuit 401 and any second MAC layer circuit 404 may be implemented by using one selector matrix. This can reduce complexity of signal routing and improve flexibility in data stream transmission.

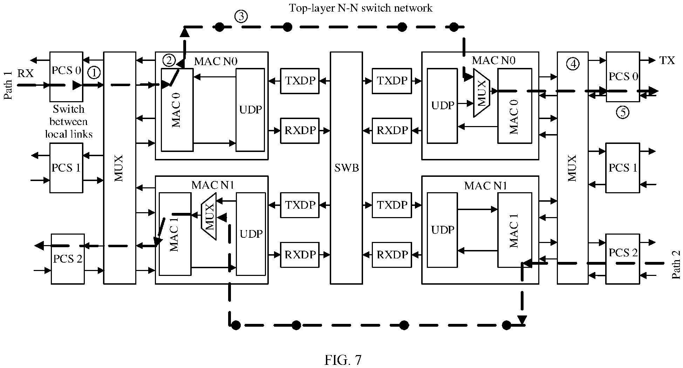

For example, FIG. 7 is a schematic diagram of a structure of another switch fabric chip according to an embodiment of this application. The switch fabric chip may be considered as a specific example of the switch fabric chip 400.

A PCS 0, a PCS 1, and a PCS 2 may be considered as a specific example of the first PCS circuit, or may be considered as a specific example of the second PCS circuit (that is, the PCS circuit is a bidirectional PCS circuit). The PCS may be configured to perform data encoding and decoding processing, and may further implement switch between local links by using a data selector (MUX) in the PCS, that is, adjust a transmission sequence of at least one sub-data stream included in an input data stream. An MAC N0 and an MAC N1 may be considered as a specific example of the first MAC layer circuit 401, or may be considered as a specific example of the second MAC layer circuit 404 (that is, the MAC layer circuit is a bidirectional MAC layer circuit). An MAC 0 module is mainly configured to perform parsing processing on a data stream. A user datagram protocol (UDP) module is mainly configured to perform protocol processing, and the MUX configured to connect the PCS and the MAC may be configured to perform bit width splicing and conversion. A TXDP is configured to perform parallel-to-serial processing on a data stream, and an RXDP is configured to perform serial-to-parallel processing on a data stream. A switch buffer (SWB) may be considered as a specific example of the processor 402, and is configured to perform buffer scheduling and switch of a data stream. A top-layer N-N switch network (represented by four black dots in FIG. 7) may be considered as a specific example of the foregoing selector matrix (in the example in FIG. 7, N=2, and therefore, the top-layer N-N switch network includes four second data selectors). The MUXs in the MAC N0 and the MAC N1 may be considered as a specific example of the first data selector. The MUXs may be disposed inside the MAC N0 and the MAC N1, or may exist independently of the MAC N0 and the MAC N1. FIG. 7 illustrates only an example in which the MUXs are disposed inside the MAC N0 and the MAC N1.

It can be easily learned that, in the switch fabric chip shown in FIG. 7, both the PCS and the MAC can perform bidirectional processing on a data stream. A path 1 shown by a dashed line in FIG. 7 is used as an example. Data streams received by a PCS 0 on the left are decoded and output to a MUX. After being parsed by an MAC N0 on the left, some data streams are sent to the SWB for buffer scheduling, switch processing, and subsequent processing (a processing procedure of a data stream in the conventional technology). The other data streams are sent to the top N-N switch network, and is output to an MUX in the MAC N0 after being selected by each second data selector in the top N-N switch network. After being selected by the MUX, the data stream is parsed by an MAC N0 on the right, encoded by a PCS 0 on the right, and then output.

A data stream that is not processed by the SWB (that is, a data stream passing through the top-layer N-N switch network) may be a data stream used for switching to another switch fabric chip. In this case, the switch fabric chip shown in FIG. 7 is used as a relay between an FIC and the another switch fabric chip, so as to implement a connection between the switch fabric chip and the FIC.

In addition, it should be noted that, in the switch fabric chip shown in FIG. 7, because both the PCS and the MAC can perform bidirectional processing on a data stream, a flow direction of the data stream is not limited to left-to-right order. FIG. 7 further shows an example in which a PCS 2 on the right inputs a data stream and a PCS 2 on the left outputs the data stream when a switch fabric chip is used as a relay, that is, a path 2 shown by a dashed line in FIG. 7. A top-layer N-N switch network that the path 2 passes through and the top-layer N-N switch network that the dashed path 1 passes through may be a same switch network.

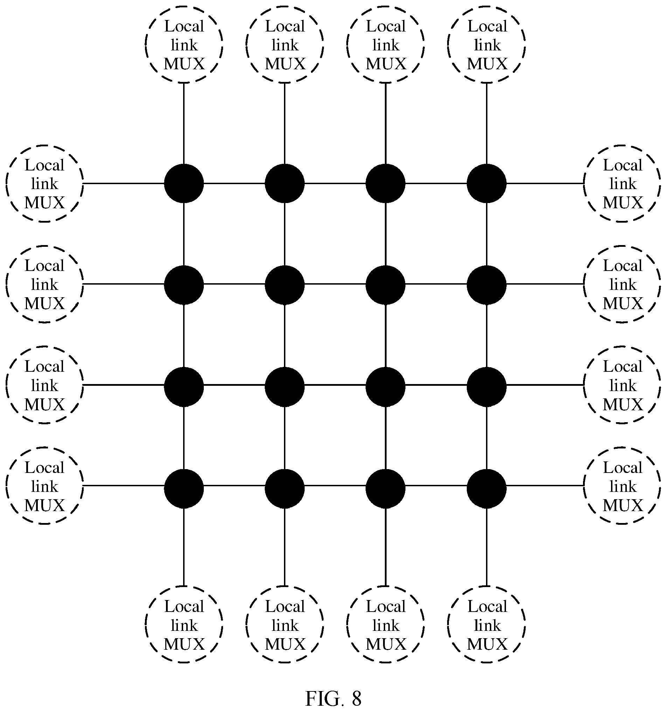

With reference to the foregoing description, it can be learned that in this embodiment of this application, switch between the local links may be performed by using the MUX in the PCS circuit (that is, the transmission sequence of the at least one sub-data stream included in the input data stream is adjusted), to improve flexibility of data stream processing; and top-layer switch of data streams may be further implemented by using the MUX in the selector matrix, so that the data stream to be transmitted to another switch fabric chip does not need to undergo scheduling and switch processing by the switch fabric chip 400, to reduce a delay of data stream transmission. That is, there are two levels of MUX selection inside the switch fabric chip 400. As shown in FIG. 8, before entering a selector matrix, switch between local links is performed by using an MUX in a PCS circuit, and after entering the selector matrix, an MUX in the selector matrix selects an output path.

In conclusion, according to the switch fabric chip 400 provided in this embodiment of this application, there are two transmission paths in the switch fabric chip 400. One transmission path is used for transmitting a data stream to another SE. In this case, the switch fabric chip 400 serves as a relay SE. The other transmission path is used for transmitting the data stream to another switch device. The transmission path may be used for implementing an existing function of the SE, that is, for implementing data switch between switch devices. In other words, the switch fabric chip 400 provided in this embodiment of this application may be configured to implement a function of an existing SE, and may also serve as a relay SE in the switch device to implement a connection between an FIC and a remote SE. In addition, when serving as the relay SE, the switch fabric chip 400 may transmit a data stream through a specific transmission path. In this way, a processing delay of the data stream is reduced. Therefore, according to the switch fabric chip 400 provided in this embodiment of this application, a problem of a high bit error rate caused by path loss when the FIC directly transmits a data stream to the remote SE can be avoided. In addition, because no additional CDR chip is required to serve as a relay when this solution is used, costs and power consumption of the switch device are reduced.

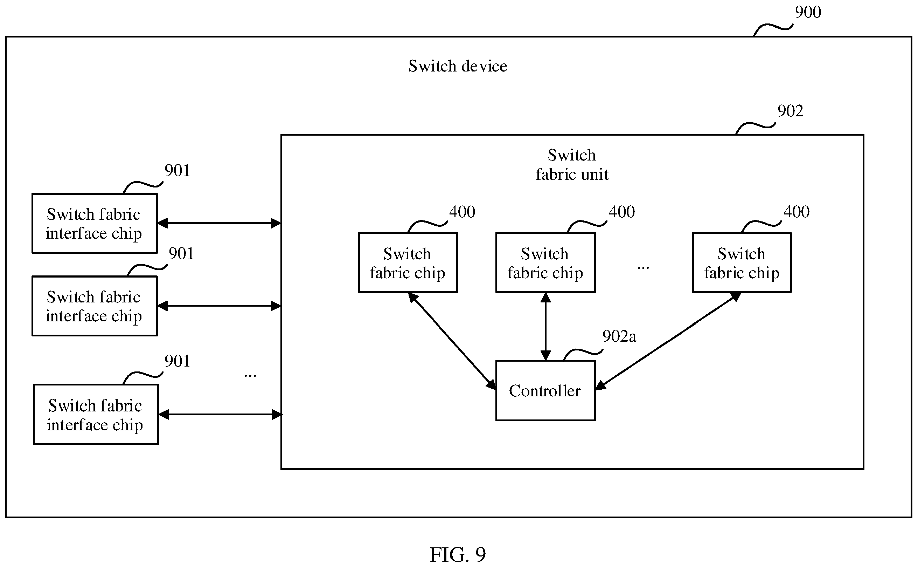

Based on a same inventive concept, an embodiment of this application further provides a switch device. As shown in FIG. 9, a switch device 900 includes a plurality of switch fabric interface chips 901 and a switch fabric unit 902. The switch fabric unit 902 integrates a plurality of switch fabric chips and a controller 902a.

At least one of the plurality of switch fabric chips is the foregoing switch fabric chip 400. The plurality of switch fabric interface chips 901 are separately directly connected to each of the plurality of switch fabric chips or indirectly connected to the switch fabric chip 400. The controller 902a is configured to send a control signal to a first data selector in the switch fabric chip 400. The control signal indicates the first data selector to select to output a data stream input by a first MAC layer circuit or output a data stream input by a processor.

That is, in the switch device 900, the switch fabric chip may all adopt the structure of the switch fabric chip 400 in FIG. 4 (this manner is shown in FIG. 9), or may partly adopt the structure of the switch fabric chip 400 and partly adopt a structure of a switch fabric chip in the conventional technology. The switch fabric interface chip 901 needs to be connected to each switch fabric chip. For a specific switch fabric interface chip 901 and a specific switch fabric chip, a connection manner between the switch fabric interface chip 901 and the switch fabric chip may be directly connected, or may be indirectly connected by using the switch fabric chip 400. In an indirect connection manner, the switch fabric chip 400 serves as a relay SE.

In the switch device 900, for a specific processing procedure of the switch fabric chip 400, reference may be made to the description in the foregoing embodiment. Details are not described herein again.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims.

## Claims

1. A switch fabric chip (400), comprising:
a first medium access control, MAC, layer circuit (401), configured to: perform parsing processing on a first input data stream to obtain a second data stream, and output the second data stream to a processor (402) and a first data selector (403);
the processor, coupled to the first MAC layer circuit, and configured to: perform scheduling and switch processing on the second data stream to obtain a third data stream, and output the third data stream to the first data selector;
the first data selector, coupled to the first MAC layer circuit and the processor, and configured to: when the first data stream is a data stream that is switched to another switch fabric chip in a switch device where the switch fabric chip is located, select to output the second data stream, and when the first data stream is a data stream that is switched to another switch device, select to output the third data stream; and
a second MAC layer circuit (404), coupled to the first data selector, and configured to: perform sending processing on a fourth data stream from the first data selector, to obtain a fifth data stream.

2. The switch fabric chip according to claim 1, wherein the first MAC layer circuit is further configured to:
receive a first frequency deviation match cell, wherein the first frequency deviation match cell indicates a frequency deviation between an upper-level chip of the switch fabric chip and the switch fabric chip; and
perform frequency modulation on the second data stream based on the first frequency deviation match cell; and
the second MAC layer circuit is further configured to:
insert, into the fifth data stream, a second frequency deviation match cell delivered by a controller in the switch device in which the switch fabric chip is located, wherein the second frequency deviation match cell indicates a frequency deviation between the switch fabric chip and a lower-level chip of the switch fabric chip.

3. The switch fabric chip according to claim 1 or 2, further comprising:
a first physical coding sublayer, PCS, circuit, configured to: receive a sixth data stream from at least one first chip interface of the switch fabric chip, perform forward error correction, FEC, coding and cell delineation to obtain the first input data stream, and output the first input data stream to the first MAC layer circuit; and
a second PCS circuit, coupled to the second MAC layer circuit, and configured to: perform encoding processing on the fifth data stream to obtain a seventh data stream, and output the seventh data stream to at least one second chip interface of the switch fabric chip.

4. The switch fabric chip according to claim 3, wherein the first PCS circuit is further configured to:
switch a transmission sequence of at least one sub-data stream comprised in the sixth data stream.

5. The switch fabric chip according to claim 4, wherein the second PCS circuit is further configured to:
switch a transmission sequence of at least one sub-data stream comprised in the seventh data stream.

6. The switch fabric chip according to any one of claims 1 to 5, further comprising:
a selector matrix, wherein the selector matrix comprises NxN second data selectors arranged in an array, every two adjacent second data selectors in the NxN second data selectors are coupled, the selector matrix is coupled to N first MAC layer circuits and N second MAC layer circuits that are comprised in the switch fabric chip, and is configured to output, to any one of the N second MAC layer circuits, a data stream input by any one of the N first MAC layer circuits, and N≥1, wherein
the first MAC layer circuit is configured to:
perform parsing processing on the input data stream, and output the parsed data stream to the first data selector by using the selector matrix.

7. The switch fabric chip according to claim 6, wherein each of the NxN second data selectors is a two-input two-output bidirectional data selector.

8. A switch device (900), comprising a plurality of switch fabric interface chips, FICs (901), and a switch fabric unit (902), wherein the switch fabric unit integrates:
a plurality of switch fabric chips (400), wherein at least one of the plurality of switch fabric chips is the switch fabric chip according to any one of claims 1 to 7, and the plurality of FICs are separately directly connected to each of the plurality of switch fabric chips or are connected by using the switch fabric chip according to any one of claims 1 to 7; and
a controller (902a), configured to send a control signal to a first data selector (403) in the switch fabric chip, wherein the control signal indicates the first data selector to select to output a data stream input by a first MAC layer circuit (401), or output a data stream input by a processor (402).

## Patentansprüche

1. Schaltstrukturchip (400), umfassend:
eine Schaltung (401) einer Medienzugriffsteuerungs-MAC-Schicht, die konfiguriert ist zum: Durchführen von Parsverarbeitung an einem ersten Eingabedatenstrom, um einen zweiten Datenstrom zu erhalten, und Ausgeben des zweiten Datenstroms an einen Prozessor (402) und einen ersten Datenselektor (403);
den Prozessor, der mit der ersten MAC-Schicht-Schaltung gekoppelt und konfiguriert ist zum: Durchführen von Disponier- und Schaltverarbeitung an dem zweiten Datenstrom, um einen dritten Datenstrom zu erhalten, und Ausgeben des dritten Datenstroms an den ersten Datenselektor;
den ersten Datenselektor, der mit der ersten MAC-Schicht-Schaltung und dem Prozessor gekoppelt und konfiguriert ist zum: Auswählen, den zweiten Datenstrom auszugeben, wenn der erste Datenstrom ein Datenstrom ist, der zu einem anderen Schaltstrukturchip in einer Schaltvorrichtung, in der sich der Schaltstrukturchip befindet, umgeschaltet wird, und Auswählen, den dritten Datenstrom auszugeben, wenn der erste Datenstrom ein Datenstrom ist, der zu einer anderen Schaltvorrichtung umgeschaltet wird; und
eine zweite MAC-Schicht-Schaltung (404), die mit dem ersten Datenselektor gekoppelt und konfiguriert ist zum: Durchführen von Sendeverarbeitung an einem vierten Datenstrom vom ersten Datenselektor, um einen fünften Datenstrom zu erhalten.

2. Schaltstrukturchip nach Anspruch 1, wobei die erste MAC-Schicht-Schaltung ferner konfiguriert ist zum:
Empfangen einer ersten Frequenzabweichungsanpassungszelle, wobei die erste Frequenzabweichungsanpassungszelle eine Frequenzabweichung zwischen einem Chip einer höheren Ebene des Schaltstrukturchips und dem Schaltstrukturchip anzeigt; und
Durchführen von Frequenzmodulation an dem zweiten Datenstrom basierend auf der ersten Frequenzabweichungsanpassungszelle; und
die zweite MAC-Schicht-Schaltung ferner konfiguriert ist zum:
Einführen einer zweiten Frequenzabweichungsanpassungszelle, die von einer Steuerung in der Schaltvorrichtung bereitgestellt wird, in der sich der Schaltstrukturchip befindet, in den fünften Datenstrom, wobei die zweite Frequenzabweichungsanpassungszelle eine Frequenzabweichung zwischen dem Schaltstrukturchip und einem Chip einer unteren Ebene des Schaltstrukturchips anzeigt.

3. Schaltstrukturchip nach Anspruch 1 oder 2, ferner umfassend:
eine erste Schaltung einer physischen Codierteilschicht, PCS, die konfiguriert ist zum: Empfangen eines sechsten Datenstroms von mindestens einer ersten Chip-Schnittstelle des Schaltstrukturchips, Durchführen von Vorwärtsfehlerkorrektur-FEC-Codierung und Zellabgrenzung, um den ersten Eingabedatenstrom zu erhalten, und Ausgeben des ersten Eingabedatenstroms an die erste MAC-Schicht-Schaltung; und
eine zweite PCS-Schaltung, die mit der zweiten MAC-Schicht-Schaltung gekoppelt und konfiguriert ist zum: Durchführen von Codierverarbeitung an dem fünften Datenstrom, um einen siebten Datenstrom zu erhalten, und Ausgeben das siebten Datenstroms an mindestens eine zweite Chip-Schnittstelle des Schaltstrukturchips.

4. Schaltstrukturchip nach Anspruch 3, wobei die erste PCS-Schaltung ferner konfiguriert ist zum:
Umschalten einer Übertragungsfolge mindestens eines Teildatenstroms, der im sechsten Datenstrom umfasst ist.

5. Schaltstrukturchip nach Anspruch 4, wobei die zweite PCS-Schaltung ferner konfiguriert ist zum:
Umschalten einer Übertragungsfolge mindestens eines Teildatenstroms, der im siebten Datenstrom umfasst ist.

6. Schaltstrukturchip nach einem der Ansprüche 1 bis 5, ferner umfassend:
eine Selektormatrix, wobei die Selektormatrix N x N zweite Datenselektoren umfasst, die in einem Array angeordnet sind, wobei jeweils zwei benachbarte zweite Datenselektoren in den N x N zweiten Datenselektoren gekoppelt sind, die Selektormatrix mit N ersten MAC-Schicht-Schaltungen und N zweiten MAC-Schicht-Schaltungen gekoppelt ist, die im Schaltstrukturchip umfasst sind, und zum Ausgeben eines Datenstroms, der durch eine der N ersten MAC-Schicht-Schaltungen eingegeben wurde, an eine beliebige der N zweiten MAC-Schicht-Schaltungen konfiguriert ist, und N ≥ 1, wobei
die erste MAC-Schicht-Schaltung konfiguriert ist zum:
Durchführen von Parsverarbeitung an dem Eingabedatenstrom und Ausgeben des geparsten Datenstroms an den ersten Datenselektor durch Verwenden der Selektormatrix.

7. Schaltstrukturchip nach Anspruch 6, wobei jeder der N x N zweiten Datenselektoren ein bidirektionaler Datenselektor mit zwei Eingängen und zwei Ausgängen ist.

8. Schaltvorrichtung (900), umfassend eine Mehrzahl von Schaltstrukturschnittstellenchips, FICs, (901) und eine Schaltstruktureinheit (902), wobei die Schaltstruktureinheit umfasst:
eine Mehrzahl von Schaltstrukturchips (400),
wobei mindestens einer der Mehrzahl von Schaltstrukturchips der Schaltstrukturchip nach einem der Ansprüche 1 bis 7 ist, und die Mehrzahl von FICs separat direkt oder durch Verwenden des Schaltstrukturchips nach einem der Ansprüche 1 bis 7 mit jedem der Mehrzahl von Schaltstrukturchips verbunden ist; und
eine Steuerung (902a), die zum Senden eines Steuersignals an einen ersten Datenselektor (403) im Schaltstrukturchip konfiguriert ist, wobei das Steuersignal dem ersten Datenselektor anzeigt, dass er Ausgeben eines Datenstroms, der von einer ersten MAC-Schicht-Schaltung (401) eingegeben wurde, oder Ausgeben eines Datenstroms, der von einem Prozessor (402) eingegeben wurde, auswählen soll.

## Revendications

1. Puce (400) de matrice de commutation, comprenant :
un premier circuit de couche de commande d'accès au support, notée MAC, (401), configuré pour : réaliser un traitement de parsage sur un premier flux de données d'entrée pour obtenir un deuxième flux de données, et fournir le deuxième flux de données à un processeur (402) et un premier sélecteur de données (403) ;
le processeur, couplé au premier circuit de couche MAC, et configuré pour : réaliser un traitement d'ordonnancement et de commutation sur le deuxième flux de données pour obtenir un troisième flux de données, et fournir le troisième flux de données au premier sélecteur de données ;
le premier sélecteur de données, couplé au premier circuit de couche MAC et au processeur, et configuré pour : lorsque le premier flux de données est un flux de données qui est commuté sur une autre puce de matrice de commutation dans un dispositif de commutation où est située la puce de matrice de commutation, choisir de fournir le deuxième flux de données et, lorsque le premier flux de données est un flux de données qui est commuté sur un autre dispositif de commutation, choisir de fournir le troisième flux de données ; et
un deuxième circuit de couche MAC (404), couplé au premier sélecteur de données, et configuré pour : réaliser un traitement d'envoi sur un quatrième flux de données depuis le premier sélecteur de données, pour obtenir un cinquième flux de données.

2. Puce de matrice de commutation selon la revendication 1, le premier circuit de couche MAC étant configuré en outre pour :
recevoir une première cellule d'adaptation d'écart de fréquence, la première cellule d'adaptation d'écart de fréquence indiquant un écart de fréquence entre une puce de niveau supérieur de la puce de matrice de commutation et la puce de matrice de commutation ; et
réaliser une modulation de fréquence sur le deuxième flux de données sur la base de la première cellule d'adaptation d'écart de fréquence ; et
le deuxième circuit de couche MAC étant configuré en outre pour :
insérer, dans le cinquième flux de données, une deuxième cellule d'adaptation d'écart de fréquence délivrée par un contrôleur dans le dispositif de commutation dans lequel est située la puce de matrice de commutation, la deuxième cellule d'adaptation d'écart de fréquence indiquant un écart de fréquence entre la puce de matrice de commutation et une puce de niveau inférieur de la puce de matrice de commutation.

3. Puce de matrice de commutation selon la revendication 1 ou 2, comprenant en outre :
un premier circuit de sous-couche physique de codage, notée PCS, configuré pour :
recevoir un sixième flux de données depuis au moins une première interface de puce de la puce de matrice de commutation, réaliser un codage de correction d'erreur directe, notée FEC, et une délimitation de cellule pour obtenir le premier flux de données d'entrée, et fournir le premier flux de données d'entrée au premier circuit de couche MAC ; et
un deuxième circuit PCS, couplé au deuxième circuit de couche MAC, et configuré pour : réaliser un traitement de codage sur le cinquième flux de données pour obtenir un septième flux de données, et fournir le septième flux de données à au moins une deuxième interface de puce de la puce de matrice de commutation.

4. Puce de matrice de commutation selon la revendication 3, le premier circuit PCS étant configuré en outre pour :
commuter une séquence de transmission d'au moins un sous-flux de données compris dans le sixième flux de données.

5. Puce de matrice de commutation selon la revendication 4, le deuxième circuit PCS étant configuré en outre pour :
commuter une séquence de transmission d'au moins un sous-flux de données compris dans le septième flux de données.

6. Puce de matrice de commutation selon l'une quelconque des revendications 1 à 5, comprenant en outre :
une matrice de sélecteurs, la matrice de sélecteurs comprenant NxN deuxièmes sélecteurs de données agencés dans un réseau, tous les deux deuxièmes sélecteurs de données adjacents dans les NxN deuxièmes sélecteurs de données étant couplés, la matrice de sélecteurs étant couplée à N premiers circuits de couche MAC et N deuxièmes circuits de couche MAC qui sont compris dans la puce de matrice de commutation, et étant configurée pour fournir, à l'un quelconque des N deuxièmes circuits de couche MAC, un flux de données entré par l'un quelconque des N premiers circuits de couche MAC, et N>_ 1,
le premier circuit de couche MAC étant configuré pour :
réaliser un traitement de parsage sur le flux de données d'entrée, et fournir le flux de données parsé au premier sélecteur de données au moyen de la matrice de sélecteurs.

7. Puce de matrice de commutation selon la revendication 6, chacun des NxN deuxièmes sélecteurs de données étant un sélecteur de données bidirectionnel à deux entrées et deux sorties.

8. Dispositif de commutation (900), comprenant une pluralité de puces d'interface de matrice, notées FIC, de commutation (901), et une unité de matrice de commutation (902), l'unité de matrice de commutation intégrant :
une pluralité de puces de matrice de commutation (400),
au moins une de la pluralité de puces de matrice de commutation étant la puce de matrice de commutation selon l'une quelconque des revendications 1 à 7, et la pluralité de FIC étant séparément connectées directement à chacune de la pluralité de puces de matrice de commutation ou étant connectées au moyen de la puce de matrice de commutation selon l'une quelconque des revendications 1 à 7 ; et
un contrôleur (902a), configuré pour envoyer un signal de commande à un premier sélecteur de données (403) dans la puce de matrice de commutation, le signal de commande indiquant au premier sélecteur de données de choisir de fournir un flux de données entré par un premier circuit de couche MAC (401), ou de fournir un flux de données entré par un processeur (402).
